# EUROPÄISCHE PATENTSCHRIFT

(11) **EP 1 080 964 B1**
(45) Veröffentlichungstag und Bekanntmachung des Hinweises auf die Patenterteilung: **08.03.2006**
(21) Anmeldenummer: 00113869.2
(22) Anmeldetag: 30.06.2000
(51) Int. Cl.: B60J 7/12

(54) **Gelenkverbindung in Dachsystemen von Fahrzeugen mit verstellbarem Dach**
Hinge connection for roof systems of vehicles with adjustable roof
Connection charnière pour système de toit de véhicules avec toit réglable

(30) Priorität: 30.08.1999 DE 19941087
(43) Veröffentlichungstag der Anmeldung: 07.03.2001
(73) Patentinhaber: CTS Fahrzeug-Dachsysteme GmbH, 74321 Bietigheim-Bissingen (DE)
(72) Erfinder: Hasselgruber, Andreas, 71735 Eberdingen-Nussdorf (DE)
(74) Vertreter: Müller, Gottfried

(56) Entgegenhaltungen:
- US-A- 2 549 153
- US-A- 3 328 072
- US-A- 5 599 056

## Beschreibung

Die Erfindung bezieht sich auf ein Dach-system von Fahrzeugen mit verstellbarem Dach mit einer Gelenkverbindung nach dem Oberbegriff des Anspruches 1.

Bei beweglichen Dachsystemen für Fahrzeuge, beispielsweise Faltverdecke für Cabriolet-Fahrzeuge, werden gemäß der gablungsbildemdem Druckschrift DE 295 16 619 U1 Gelenkverbindungen zwischen Gelenkarmen des Gestänges des Dachsystems eingesetzt, die aus einem an einem Gelenkarm gehaltenen Lagerbolzen bestehen, der in einer Lageraufnahme des anderen Gelenkarms geführt ist. Die Qualität der Gelenkverbindungen muss hohen Anforderungen genügen, weil die Gestänge einer hohen mechanischen Belastung sowie Witterungseinflüssen ausgesetzt sind und die gleiche Lebensdauer wie das Fahrzeug aufweisen müssen. Zur Minderung der Gelenkreibung sind die Gelenkverbindungen in der Regel in der Weise aufgebaut, dass der Lagerbolzen von einer Gleitlagerbuchse umschlossen ist, die aus einem sehr reibungsarmen Material, häufig mit einer PTFE-Beschichtung, besteht. Die Gleitlagerbuchse sorgt so für eine reibungsarme Bewegung des Lagerbolzens in der Lageraufnahme.

Die Gleitlagerbuchse erhöht das Gewicht sowie die Kosten der Gelenkverbindung. Darüberhinaus steigt der Fertigungsaufwand für die Gelenkverbindung mit der Anzahl der Gelenkbauteile überproportional stark an. Mit wachsender Zahl der Gelenkbauteile wächst auch das Risiko, dass während der Fertigung oder im laufenden Betrieb eines der Bauteile aufgrund der hohen mechanischen Beanspruchung außer Funktion gesetzt wird; insbesondere die in der Regel aus Kunststoff gefertigten Gleitlagerbuchsen müssen in der Lage sein, verhältnismäßig hohe Lagerkräfte innerhalb zulässiger Verschleißgrenzen zu übertragen, was eine hohe Sorgfalt im Hinblick auf Materialauswahl und Fertigung erforderlich macht.

Aus den Druckschriften DE 42 16 557 A1 und DE 42 16 559 C2 ist es bekannt, in einem Schwenklager einen Kugelkörper vorzusehen, der gegenüber dem Gehäuse des Schwenklagers durch einen Führungsring abgestützt ist, wobei an den einander zugewandten Oberflächenbereichen von Kugelkörper und Führungsring eine reibungsvermindernde Oberflächenbeschichtung vorgesehen ist.

Genauere Angaben über die reibungsvermindernden Oberflächenbeschichtungen im Hinblick auf Materialauswahl und Dicke der Beschichtung, insbesondere für auf den Einsatz in verstellbaren Fahrzeugdächern, sind diesen Druckschriften nicht zu entnehmen.

Der Erfindung liegt das Problem zugrunde, stark beanspruchte Gelenkverbindungen im Bereich von Fahrzeugkarosserien mit einfachen Mitteln fertigungsfreundlich und betriebssicher auszubilden.

Dieses Problem wird erfindungsgemäß mit den Merkmalen des Anspruches 1 gelöst.

Aufgrund der reibungsarmen Oberflächenbeschichtung, die zumindest im Bereich der miteinander in Kontakt stehenden Abschnitte auf die Oberfläche wenigstens eines der zusammenwirkenden Gelenkteile aufgebracht ist, ist die Gelenkreibung auch ohne Verwendung einer Gleitlagerbuchse stark herabgesetzt. Auf eine Gleitlagerbuchse im Gelenk kann verzichtet werden, wodurch sich die Anzahl der Bauteile im Gelenk und damit der Fertigungs- und Montageaufwand sowie das Risiko eines Bauteilausfalls verringert.

Es reicht aus, nur eines der zusammenwirkenden Gelenkbauteile mit der Beschichtung zu versehen; das andere Bauteil kann gegebenenfalls auch ohne reibungsarme Beschichtung ausgestattet sein. Desweiteren genügt es, die Beschichtung nur im Bereich der miteinander in Kontakt tretenden Gelenkabschnitte aufzubringen; es ist nicht unbedingt erforderlich, das gesamte Bauteil, welches Träger eines beschichteten Gelenkabschnitt ist, mit einer Beschichtung zu versehen. Auf diese Weise können innerhalb eines Karosseriebauteils, welches mit einem Gelenkabschnitt ausgestattet ist, verschiedenen Bauteilabschnitten unterschiedliche Oberflächeneigenschaften zugeordnet werden.

Die erfindungsgemäße Oberflächenbeschichtung eignet sich in besonderer Weise zur Verwendung in Dachsystemen von Fahrzeugen mit verstellbarem Dach, das mittels einem Verdeckgestänge zwischen Schließstellung und Öffnungsstellung verstellt werden kann, wobei das Verdeckgestänge eine Mehrzahl von zusammenklappbaren und auseinanderfaltbaren beweglichen Bügeln umfasst, die über Gelenkverbindungen miteinander bzw. zur Fahrzeugkarosserie gekoppelt sind. Die beweglichen Bügel werden vorteilhaft zumindest im Bereich ihrer Gelenkabschnitte mit der reibungsarmen Beschichtung versehen, wodurch die bislang übliche Gleitlagerbuchse eingespart werden kann. Trotz der relativ hohen mechanischen Belastung bei der Überführung zwischen Öffnungs- und Schließstellung wird die Gelenkreibung durch die Beschichtung drastisch herabgesetzt, wodurch die nichtkonservativen Lagerkräfte und die für die Verstellung erforderlichen Stellkräfte reduziert werden sowie der Verschleiß gesenkt wird.

Als Oberflächenbeschichtung wird eine Aluminiumschicht in einer Dicke von mindestens 5 µm auf eines oder auf beide zusammenwirkenden Gelenkteile aufgebracht. Die Oberflächenbeschichtung kann beispielsweise im Plasma-Sprüh-Verfahren oder über eine kathodische Tauchlackierung auf das Gestänge aufgebracht werden.

Es kann ausreichend sein, nur eines der beiden in Kontakt stehenden Gelenkteile zu beschichten, wobei sowohl eine Beschichtung des Lagerbolzens an einem der Gelenkteile als auch eine Beschichtung der Bolzenaufnahme am gegenüberliegenden Gelenkteil in Frage kommt. Die Reibungsminderung an einem Bauteil reicht grundsätzlich aus, um auf zusätzliche Maßnahmen wie den Einsatz von Gleitlagerbuchsen verzichten zu können.

Durch die Beschichtung wird der Reibungskoeffizient zwischen den zusammenwirkenden Gelenkbauteilen vorteilhaft auf einen Wert kleiner als 0.3, insbesondere kleiner als 0.1 und gegebenenfalls kleiner als 0.05, herabgesetzt. Durch die Reduzierung des Reibungskoeffizienten wird als weiterer Effekt - zusätzlich zum geringeren Verschleiß - das Kraftniveau der zur Verstellung erforderlichen Kräfte gemindert, so dass kleiner dimensionierte Antriebe für die Ausübung der Verstellbewegung ausreichen.

Weitere Vorteile und zweckmäßige Ausführungsformen sind den weiteren Ansprüchen, der Figurenbeschreibung und der Zeichnungen zu entnehmen. Es zeigen:
- Fig. 1: eine perspektivische Ansicht von zwei Dachbügeln, die über ein Verbindungsgelenk aneinander gekoppelt sind,
- Fig. 2: einen Schnitt durch das Verbindungsgelenk.

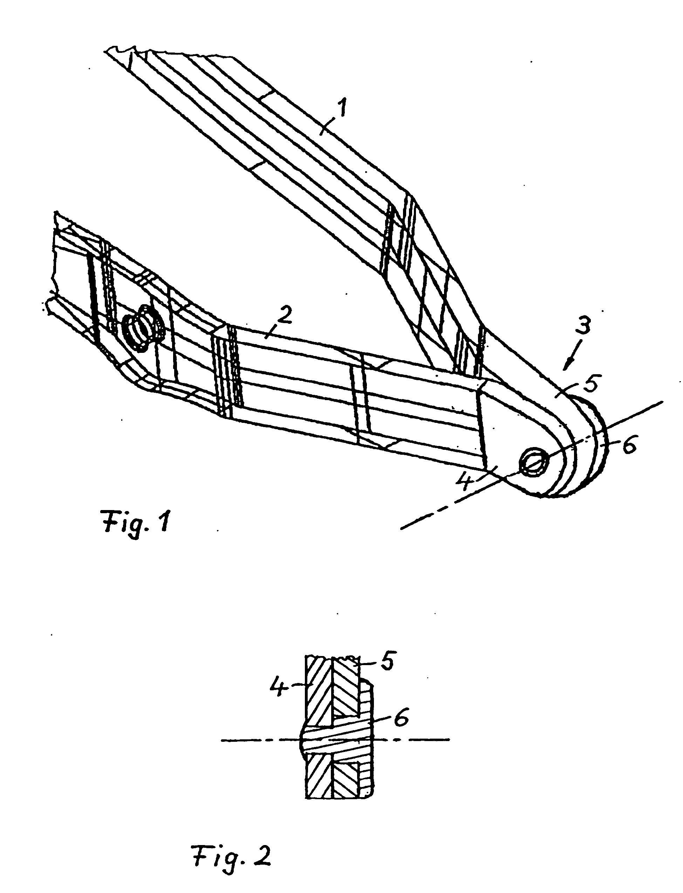

Die in Fig. 1 dargestellten Dachbügel 1, 2 sind Teil eines zwischen Schließ- und Öffnungsstellung verstellbaren Dachsystems eines Kraftfahrzeugs, das beispielsweise als Faltverdeck ausgebildet sein kann und ein Verdeckgestänge mit aufliegendem Verdeckbezug umfassen kann. Zwischen den Dachbügeln 1, 2 ist ein Verbindungsgelenk 3 vorgesehen, das eine Relativdrehung zwischen den beiden Dachbügeln erlaubt und das zwei Lagerabschnitte 4, 5 umfasst, die jeweils einem der Dachbügel 1, 2 zugeordnet sind, insbesondere einteilig mit den Endabschnitten der jeweiligen Dachbügel ausgebildet sind. In jeden Lagerabschnitt 4, 5 ist jeweils eine Bohrung eingebracht, in der ein die beiden Lagerabschnitte 4, 5 verbindender Lagerbolzen 6 aufgenommen ist. Die beiden Bohrungen, die einen sich unterscheidenden Durchmesser aufweisen (siehe Fig. 2), haben die Funktion von Bolzenaufnahmen.

Zur Herabsetzung der Reibung weist zumindest eines der an der Relativbewegung beteiligten Bauteile der Gelenkverbindung bzw. des Verbindungsgelenks 3 eine reibungsmindernde Oberflächenbeschichtung auf. Die Oberflächenbeschichtung kann entweder nur auf eines oder aber auf mehrere oder auf alle an der Relativbewegung beteiligte Bauteile aufgebracht sein. Die Oberflächenbeschichtung besteht aus einer aufgesprühten oder im Tauchverfahren auflackierten oder in einem sonstigen Verfahren aufgebrachten besonderes reibungsarmen Schicht, beispielsweise eine Aluminiumoxidschicht, die bevorzugt eine Dicke von zumindest 5 µm und einen Reibungskoeffizienten von maximal 0.3, zweckmäßig maximal 0.1 und insbesondere maximal 0.05 aufweist. Die Herabsetzung des Reibungskoeffizienten wird vorteilhaft durch eine homogene, feinkörnige Struktur der Beschichtung erreicht.

Eine Aluminiumoxidschicht auf den Bauteilen kann beispielsweise dadurch erzeugt werden, dass zunächst eine reine Aluminiumschicht aufgebracht wird, welche anschließend in der Weise anodisiert wird, dass die Aluminiumschicht in eine Aluminiumoxid-Konversionsschicht umgewandelt wird.

Darüberhinaus weist die Oberflächenbeschichtung weitere vorteilhafte Eigenschaften wie ausreichend hohe Korrosionsstandzeit, Durchschlagfestigkeit und Härte auf.

Der Lagerbolzen 6 kann mit der reibungsarmen Beschichtung versehen sein, wobei in diesem Fall auf eine entsprechende Beschichtung der Bolzenaufnahmen in den Lagerabschnitten 4, 5 verzichtet werden kann. In dieser Ausführung ist zwischen den Dachbügeln bzw. Lenkern 1, 2 eine Anlaufscheibe angeordnet.

In einer weiteren Ausführung sind die Bolzenaufnahmen in den Lagerabschnitten 4, 5 mit der Beschichtung überzogen; der Lagerbolzen 6 ist vernickelt.

In jeder vorgenannten Ausführung ist sichergestellt, dass zwischen zwei unmittelbar in Kontakt stehenden und eine Relativbewegung ausführenden Bauteilen des Verbindungsgelenks eine reibungsarme Beschichtung aufgebracht ist.

Wie insbesondere Fig. 2 zu entnehmen, kann der Lagerbolzen 6 in den Aufnahmen der Lagerabschnitte 4, 5 vernietet werden.

In einer weiteren zweckmäßigen Ausführung kann es angezeigt sein, die mit den Lagerabschnitten 4, 5 einteilig ausgeführten Dachbügel vollständig mit der reibungsarmen Schicht zu überziehen, so dass auch Bereiche außerhalb der Lagerabschnitte mit der Beschichtung versehen sind.

Darüberhinaus können auch alle Bauteile des Verbindungsgelenks mit der reibungsarmen Schicht versehen sein.

## Patentansprüche

1. Dachsystem geignet für Fahrzeuge mit verstellbarem Dach, des Dachsystemverschen mit einer Gelenkverbindung mit einem ersten Lagelabschnitt (4) und einem zweiten Lagerabschnitt (5), welche über einen Lagerbolzen (6) zusammen gehalten sind,
**dadurch gekennzeichnet ,**
**dass** zur Herabsetzung der Reibung zumindest eines der Gelenkteile (4, 5, 6) der Gelenkverbindung (1) mit einer reibungsarmen Oberflächenbeschichtung aus Aluminiumoxid mit einer Dicke von zumindest 5 µm versehen ist.

2. Gelenkverbindung eines Dachsystems nach Anspruch 1,
**dadurch gekennzeichnet,**
**dass** die Beschichtung im wesentlichen auf die miteinander in Kontakt stehenden Bereiche der Gelenkteile (4, 5, 6) beschränkt ist.

3. Gelenkverbindung eines Dachsystems nach Anspruch 1 oder 2,
**dadurch gekennzeichnet ,**
**dass** nur eines der unmittelbar in Kontakt stehenden und relativ zueinander beweglichen Gelenkteile (4, 5, 6) mit der Oberflächenbeschichtung versehen ist.

4. Gelenkverbindung eines Dachsystems nach einem der Ansprüche 1 bis 3,
**dadurch gekennzeichnet,**
**dass** zumindest ein Lagerabschnitt (4, 5) eine Lagerbohrung aufweist, die oberflächenbeschichtet ist.

5. Gelenkverbindung eines Dachsystems nach einem der Ansprüche 1 bis 4,
**dadurch gekennzeichnet ,**
**dass** der Lagerbolzen (6) oberflächenbeschichtet ist.

6. Gelenkverbindung eines Dachsystems nach einem der Ansprüche 1 bis 5,
**dadurch gekennzeichnet,**
**dass** die Mantelfläche des Lagerbolzens (6) unmittelbar in Kontakt mit der Oberfläche der Lagerbohrung steht.

7. Gelenkverbindung eines Dachsystems nach einem der Ansprüche 1 bis 6,
**dadurch gekennzeichnet ,**
**dass** die Oberflächenbeschichtung einen Reibungskoeffizienten von maximal 0.3, insbesondere maximal 0.1, aufweist.

8. Gelenkverbindung eines Dachsystems nach einem der Ansprüche 1 bis 7,
**dadurch gekennzeichnet,**
**dass** beide Lagerabschnitte (4, 5) gegenüber der Karosserie beweglich ausgebildet sind.

9. Gelenkverbindung eines Dachsystems nach einem der Ansprüche 1 bis 8,
**dadurch gekennzeichnet ,**
**dass** die Gelenkverbindung (1) in verstellbaren Verdeckkastendeckeln für Dachsysteme von Fahrzeugen eingesetzt wird.

## Claims

1. Roof system suitable for vehicles with an adjustable roof, the roof system being provided with a hinge connection with a first bearing section (4) and a second bearing section (5) which are held together via a bearing bolt (6), **characterized in that**, in order to reduce the friction, at least one of the hinge parts (4, 5, 6) of the hinge connection (1) is provided with a low-friction surface coating of aluminium oxide with a thickness of at least 5 µm.

2. Hinge connection of a roof system according to Claim 1, **characterized in that** the coating is essentially limited to those regions of the hinge parts (4, 5, 6) which are in contact with one another.

3. Hinge connection of a roof system according to Claim 1 or 2, **characterized in that** only one of the hinge parts (4, 5, 6) which are directly in contact and are moveable relative to one another is provided with the surface coating.

4. Hinge connection of a roof system according to one of Claims 1 to 3, **characterized in that** at least one bearing section (4, 5) has a bearing hole which is surface-coated.

5. Hinge connection of a roof system according to one of Claims 1 to 4, **characterized in that** the bearing bolt (6) is surface-coated.

6. Hinge connection of a roof system according to one of Claims 1 to 5, **characterized in that** the circumferential surface of the bearing bolt (6) is directly in contact with the surface of the bearing hole.

7. Hinge connection of a roof system according to one of Claims 1 to 6, **characterized in that** the surface coating has a coefficient of friction of at maximum 0.3, in particular at maximum 0.1.

8. Hinge connection of a roof system according to one of Claims 1 to 7, **characterized in that** the two bearing sections (4, 5) are of moveable design in relation to the bodywork.

9. Hinge connection of a roof system according to one of Claims 1 to 8, **characterized in that** the hinge connection (1) is used in displaceable folding-top compartment lids for roof systems of vehicles.

## Revendications

1. Système de toit pour véhicules à toit réglable, le système de toit étant pourvu d'une connexion articulée comportant une première partie de palier (4) et une deuxième partie de palier (5), lesquelles sont maintenues ensemble par l'intermédiaire d'un axe de palier (6), **caractérisé en ce qu'**en vue de diminuer le frottement, au moins l'une des pièces articulées (4, 5, 6) de la connexion articulée (1) est pourvue d'un revêtement de surface à faible frottement en oxyde d'aluminium d'une épaisseur d'au moins 5 µm.

2. Connexion articulée d'un système de toit selon la revendication 1, **caractérisée en ce que** le revêtement est limité substantiellement aux zones des pièces articulées (4, 5, 6) se trouvant en contact entre elles.

3. Connexion articulée d'un système de toit selon la revendication 1 ou 2, **caractérisée en ce qu'**uniquement l'une des pièces articulées (4, 5, 6) se trouvant directement en contact et mobiles les unes par rapport aux autres est pourvue du revêtement de surface.

4. Connexion articulée d'un système de toit selon l'une quelconque des revendications 1 à 3, **caractérisée en ce qu'**au moins une partie de palier (4, 5) présente un trou de palier, lequel est revêtu en surface.

5. Connexion articulée d'un système de toit selon l'une quelconque des revendications 1 à 4, **caractérisée en ce que** l'axe de palier (6) est revêtu en surface.

6. Connexion articulée d'un système de toit selon l'une quelconque des revendications 1 à 5, **caractérisée en ce que** la surface d'enveloppe de l'axe de palier (6) est directement en contact avec la surface du trou de palier.

7. Connexion articulée d'un système de toit selon l'une quelconque des revendications 1 à 6, **caractérisée en ce que** le revêtement de surface présente un coefficient de frottement de maximum 0.3, en particulier de maximum 0.1.

8. Connexion articulée d'un système de toit selon l'une quelconque des revendications 1 à 7, **caractérisée en ce que** les deux parties de palier (4, 5) sont conformées de façon mobile par rapport à la carrosserie.

9. Connexion articulée d'un système de toit selon l'une quelconque des revendications 1 à 8, **caractérisée en ce que** la connexion articulée (1) est montée dans des couvercles de caissons de capotes réglables pour systèmes de toits de véhicules.
